# EUROPEAN PATENT APPLICATION

(11) **EP 4 852 570 A1**
(43) Date of publication of application: **09.12.2026**
(21) Application number: 25767371.5
(22) Date of filing: 04.03.2025
(51) Int. Cl.: H04W 72/12

(54) **COMMUNICATION METHOD AND COMMUNICATION APPARATUS**

(30) Priority: 08.03.2024 CN 202410278052
(71) Applicant: HUAWEI TECHNOLOGIES CO., LTD., Shenzhen, Guangdong 518129 (CN)
(72) Inventor: GAN, Ming, Shenzhen, Guangdong 518129 (CN); GUO, Yuchen, Shenzhen, Guangdong 518129 (CN); LI, Yunbo, Shenzhen, Guangdong 518129 (CN); ZHAO, Yue, Shenzhen, Guangdong 518129 (CN)
(74) Representative: Huawei European IPR
(86) International application number: PCT/CN2025/080549
(87) International publication number: WO 2025/185633

(57) **Abstract**

Embodiments of this application provide a communication method and a communication apparatus, so that a first station can receive an OBSS data packet on a first channel of an operating channel bandwidth and send a PPDU on a second channel, thereby reducing interference caused by transmission of the PPDU to transmission of the OBSS data packet. The communication method includes: A first station receives an overlapping basic service set OBSS data packet on a first channel of an operating channel bandwidth, where the first channel includes a first primary channel; and the first station sends a physical layer protocol data unit PPDU on a second channel of the operating channel bandwidth, where transmission of the PPDU meets a preset condition, and the preset condition is used to reduce interference caused by transmission of the PPDU to transmission of the OBSS data packet.

## Description

This application claims priority to Chinese Patent Application No. 202410278052.9, filed with the China National Intellectual Property Administration on March 8, 2024 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

With development of wireless technologies, a system bandwidth is continuously expanding. For example, in the wireless fidelity (wireless fidelity, Wi-Fi) field, systems up to and including Wi-Fi 6 support a maximum bandwidth of 160 MHz, and Wi-Fi 7 supports a maximum bandwidth of 320 MHz. A larger bandwidth may be used to provide a higher transmission rate. However, according to the 802.11 series standards, a channel can be successfully contended for only when a primary channel is idle; and if the primary channel is busy, other channels cannot be used even if they are idle, resulting in a waste of channel resources.

### SUMMARY

Embodiments of this application provide a communication method and a communication apparatus, so that a first station can receive an OBSS data packet on a first channel of an operating channel bandwidth and send a PPDU on a second channel, thereby reducing interference caused by transmission of the PPDU to transmission of the OBSS data packet.

To achieve the foregoing objective, this application uses the following technical solutions.

According to a first aspect, a communication method is provided. The method may be performed by a first station, or may be performed by a component of the first station, for example, a processor, a chip, or a chip system of the first station, or may be implemented by a logical module or software that can implement all or some functions of the first station. For example, the method may be performed by the first station. The method includes: The first station receives an overlapping basic service set OBSS data packet on a first channel of an operating channel bandwidth, where the first channel includes a first primary channel; and the first station sends a physical layer protocol data unit PPDU on a second channel of the operating channel bandwidth, where transmission of the PPDU meets a preset condition, and the preset condition is used to reduce interference caused by transmission of the PPDU to transmission of the OBSS data packet.

According to the communication method provided in embodiments of this application, the first station can receive the OBSS data packet on the first channel of the operating channel bandwidth, and send the PPDU on the second channel. Transmission of the PPDU meets the preset condition, which can reduce interference caused by transmission of the PPDU to transmission of the OBSS data packet.

According to a second aspect, a communication method is provided. The method may be performed by a second station, or may be performed by a component of the second station, for example, a processor, a chip, or a chip system of the second station, or may be implemented by a logical module or software that can implement all or some functions of the second station. For example, the method may be performed by the second station. The method includes: The second station receives a physical layer protocol data unit PPDU on a second channel of an operating channel bandwidth, where transmission of the PPDU meets a preset condition, and the preset condition is used to reduce interference caused by transmission of the PPDU to transmission of an overlapping basic service set OBSS data packet transmitted on a first channel, where the first channel includes a first primary channel.

According to the communication method provided in embodiments of this application, the second station receives the PPDU from a first station on the second channel of the operating channel bandwidth. Transmission of the PPDU meets the preset condition, which can reduce interference caused by transmission of the PPDU to transmission of the OBSS data packet.

With reference to the first aspect or the second aspect, the first channel includes the first primary channel, or the first channel includes the first primary channel and a secondary channel.

With reference to the first aspect or the second aspect, in embodiments of this application, the second channel includes a second primary channel, or the second channel includes the second primary channel and another secondary channel.

With reference to the first aspect or the second aspect, in embodiments of this application, the preset condition includes that the second channel is non-adjacent to the first channel. In this solution, the second channel is non-adjacent to the first channel, which is equivalent to that the second channel is far away from the first channel. This can reduce interference caused by the PPDU sent on the second channel to the OBSS received on the first channel.

With reference to the first aspect or the second aspect, in embodiments of this application, the preset condition includes that a difference between a center frequency of the second channel and a center frequency of the first channel is greater than or equal to a first threshold. In this solution, the difference between the center frequency of the second channel and the center frequency of the first channel is greater than or equal to the first threshold, which can reduce interference caused by the PPDU sent on the second channel to the OBSS received on the first channel.

With reference to the first aspect or the second aspect, in embodiments of this application, the preset condition includes that a difference between a center frequency of any channel included in the second channel and a center frequency of the first channel is greater than or equal to a first threshold. In this solution, the difference between the center frequency of the any channel included in the second channel and the center frequency of the first channel is greater than or equal to the first threshold, which can reduce interference caused by the PPDU sent on the second channel to the OBSS received on the first channel.

With reference to the first aspect or the second aspect, in a possible implementation, the first threshold is predefined. In this solution, the first threshold is predefined, which can reduce overheads for indicating the first threshold.

With reference to the first aspect, in another possible implementation, the communication method provided in embodiments of this application further includes: The first station receives first indication information from an access point AP, where the first indication information indicates the first threshold. In this solution, the AP indicates the first threshold to the first station by using the first indication information, which is flexible.

With reference to the first aspect or the second aspect, the first threshold is, for example, a transmission bandwidth of the PPDU.

With reference to the first aspect or the second aspect, in embodiments of this application, the preset condition includes that transmit power of the PPDU is less than or equal to a second threshold. In this solution, the transmit power of the PPDU is limited, to reduce interference caused by the PPDU sent on the second channel to the OBSS received on the first channel.

With reference to the first aspect or the second aspect, in embodiments of this application, the preset condition includes that a transmission parameter of the PPDU is partially or completely the same as a transmission parameter of the OBSS data packet. In this solution, the transmission parameter of the PPDU is limited to be partially or completely the same as the transmission parameter of the OBSS data packet, so that there is no interference or little interference between subcarriers of the PPDU and the OBSS data packet, thereby reducing interference caused by the PPDU sent on the second channel to the OBSS received on the first channel.

The transmission parameter may include at least one of a cyclic prefix CP length of an orthogonal frequency division multiplexing OFDM symbol or a quantity of fast Fourier transform FFT points.

With reference to the first aspect or the second aspect, in embodiments of this application, an MCS set of the OBSS data packet is an MCS set other than an MCS 0 to an MCS 4.

According to a third aspect, a communication method is provided. The method may be performed by a first station, or may be performed by a component of the first station, for example, a processor, a chip, or a chip system of the first station, or may be implemented by a logical module or software that can implement all or some functions of the first station. For example, the method may be performed by the first station. The method includes: The first station receives an overlapping basic service set OBSS on a first channel of an operating channel bandwidth, where the first channel includes a first primary channel; and the first station sends a PPDU on a second channel of the operating channel bandwidth, where the second channel is non-adjacent to the first channel.

According to the communication method provided in embodiments of this application, the first station can receive the OBSS data packet on the first channel of the operating channel bandwidth, and send the PPDU on the second channel. The second channel is non-adjacent to the first channel, which can reduce interference caused by transmission of the PPDU to transmission of the OBSS data packet.

According to a fourth aspect, a communication method is provided. The method may be performed by a second station, or may be performed by a component of the second station, for example, a processor, a chip, or a chip system of the second station, or may be implemented by a logical module or software that can implement all or some functions of the second station. For example, the method may be performed by the second station. The method includes: The second station receives a PPDU on a second channel of an operating channel bandwidth, where the second channel is non-adjacent to a first channel, and the first channel is used to transmit an overlapping basic service set OBSS data packet, where the first channel includes a first primary channel.

According to the communication method provided in embodiments of this application, the second station receives the PPDU from a first station on the operating channel bandwidth. The second channel is non-adjacent to the first channel, which can reduce interference caused by transmission of the PPDU to transmission of the OBSS data packet.

With reference to the third aspect or the fourth aspect, the first channel includes the first primary channel, or the first channel includes the first primary channel and a secondary channel.

With reference to the third aspect or the fourth aspect, in embodiments of this application, the second channel includes a second primary channel, or the second channel includes the second primary channel and another secondary channel.

According to a fifth aspect, a communication method is provided. The method may be performed by a first station, or may be performed by a component of the first station, for example, a processor, a chip, or a chip system of the first station, or may be implemented by a logical module or software that can implement all or some functions of the first station. For example, the method may be performed by the first station. The method includes: The first station receives an overlapping basic service set OBSS on a first channel of an operating channel bandwidth, where the first channel includes a first primary channel; and the first station sends a PPDU on a second channel of the operating channel bandwidth, where a difference between a center frequency of the second channel and a center frequency of the first channel is greater than or equal to a first threshold.

According to the communication method provided in embodiments of this application, the first station can receive the OBSS data packet on the first channel of the operating channel bandwidth, and send the PPDU on the second channel. The difference between the center frequency of the second channel and the center frequency of the first channel is greater than or equal to the first threshold, which can reduce interference caused by transmission of the PPDU to transmission of the OBSS data packet.

According to a sixth aspect, a communication method is provided. The method may be performed by a second station, or may be performed by a component of the second station, for example, a processor, a chip, or a chip system of the second station, or may be implemented by a logical module or software that can implement all or some functions of the second station. For example, the method may be performed by the second station. The method includes: The second station receives a PPDU on a second channel of an operating channel bandwidth, where a difference between a center frequency of the second channel and a center frequency of a first channel is greater than or equal to a first threshold, and the first channel includes a first primary channel.

According to the communication method provided in embodiments of this application, the second station receives the PPDU from a first station on the second channel of the operating channel bandwidth. The difference between the center frequency of the second channel and the center frequency of the first channel is greater than or equal to the first threshold, which can reduce interference caused by transmission of the PPDU to transmission of the OBSS data packet.

With reference to the fifth aspect or the sixth aspect, the first channel includes the first primary channel, or the first channel includes the first primary channel and a secondary channel.

With reference to the fifth aspect or the sixth aspect, in embodiments of this application, the second channel includes a second primary channel, or the second channel includes the second primary channel and another secondary channel.

With reference to the fifth aspect or the sixth aspect, in a possible implementation, the first threshold is predefined. In this solution, the first threshold is predefined, which can reduce overheads for indicating the first threshold.

With reference to the fifth aspect, in another possible implementation, the communication method provided in embodiments of this application further includes: The first station receives first indication information from an access point AP, where the first indication information indicates the first threshold. In this solution, the AP indicates the first threshold to the first station by using the first indication information, which is flexible.

With reference to the fifth aspect or the sixth aspect, the first threshold is, for example, a transmission bandwidth of the PPDU.

According to a seventh aspect, a communication method is provided. The method may be performed by a first station, or may be performed by a component of the first station, for example, a processor, a chip, or a chip system of the first station, or may be implemented by a logical module or software that can implement all or some functions of the first station. For example, the method may be performed by the first station. The method includes: The first station receives an overlapping basic service set OBSS on a first channel of an operating channel bandwidth, where the first channel includes a first primary channel; and the first station sends a PPDU on a second channel of the operating channel bandwidth, where a difference between a center frequency of any channel included in the second channel and a center frequency of the first channel is greater than or equal to a first threshold.

According to the communication method provided in embodiments of this application, the first station can receive the OBSS data packet on the first channel of the operating channel bandwidth, and send the PPDU on the second channel. The difference between the center frequency of the any channel included in the second channel and the center frequency of the first channel is greater than or equal to the first threshold, which can reduce interference caused by transmission of the PPDU to transmission of the OBSS data packet.

According to an eighth aspect, a communication method is provided. The method may be performed by a second station, or may be performed by a component of the second station, for example, a processor, a chip, or a chip system of the second station, or may be implemented by a logical module or software that can implement all or some functions of the second station. For example, the method may be performed by the second station. The method includes: The second station receives a PPDU on a second channel of an operating channel bandwidth, where a difference between a center frequency of any channel included in the second channel and a center frequency of a first channel is greater than or equal to a first threshold, and the first channel is used to transmit an overlapping basic service set OBSS data packet, where the first channel includes a first primary channel.

According to the communication method provided in embodiments of this application, the second station receives the PPDU from a first station on the second channel of the operating channel bandwidth. The difference between the center frequency of the any channel included in the second channel and the center frequency of the first channel is greater than or equal to the first threshold, which can reduce interference caused by transmission of the PPDU to transmission of the OBSS data packet.

With reference to the seventh aspect or the eighth aspect, in a possible implementation, the first threshold is predefined. In this solution, the first threshold is predefined, which can reduce overheads for indicating a second threshold.

With reference to the seventh aspect, in another possible implementation, the communication method provided in embodiments of this application further includes: The first node receives first indication information from an AP, where the first indication information indicates the first threshold. In this solution, the AP indicates the first threshold to the first station by using the first indication information, which is flexible.

With reference to the seventh aspect or the eighth aspect, the first threshold is, for example, a transmission bandwidth of the PPDU.

According to a ninth aspect, a communication method is provided. The method may be performed by a first station, or may be performed by a component of the first station, for example, a processor, a chip, or a chip system of the first station, or may be implemented by a logical module or software that can implement all or some functions of the first station. For example, the method may be performed by the first station. The method includes: The first station receives an overlapping basic service set OBSS on a first channel of an operating channel bandwidth, where the first channel includes a first primary channel; and the first station sends a PPDU on a second channel of the operating channel bandwidth, where transmit power of the PPDU is less than or equal to a second threshold.

According to the communication method provided in embodiments of this application, the first station can receive the OBSS data packet on the first channel of the operating channel bandwidth, and send the PPDU on the second channel. The transmit power of the PPDU is less than or equal to the second threshold. The transmit power of the PPDU is limited, so that interference caused by the PPDU sent on the second channel to the OBSS received on the first channel is reduced.

According to a tenth aspect, a communication method is provided. The method may be performed by a second station, or may be performed by a component of the second station, for example, a processor, a chip, or a chip system of the second station, or may be implemented by a logical module or software that can implement all or some functions of the second station. For example, the method may be performed by the second station. The method includes: The second station receives a PPDU on a second channel of an operating channel bandwidth, where transmit power of the PPDU is less than or equal to a second threshold.

According to the communication method provided in embodiments of this application, the second station receives the PPDU from a first station on the second channel of the operating channel bandwidth. The transmit power of the PPDU is less than or equal to the second threshold. The transmit power of the PPDU is limited, so that interference caused by the PPDU sent on the second channel to the OBSS received on the first channel is reduced.

According to an eleventh aspect, a communication apparatus is provided, configured to implement the foregoing methods. The communication apparatus may be the first station in the first aspect, the third aspect, the fifth aspect, the seventh aspect, or the ninth aspect, or an apparatus included in the first station, for example, a chip; or the communication apparatus may be the second station in the second aspect, the fourth aspect, the sixth aspect, the eighth aspect, or the tenth aspect, or an apparatus included in the second station, for example, a chip.

The communication apparatus includes a corresponding module, unit, or means (means) for implementing the foregoing method. The module, unit, or means may be implemented by using hardware or software, or implemented by using hardware by executing corresponding software. The hardware or the software includes one or more modules or units corresponding to the foregoing functions.

In some possible designs, the communication apparatus may include a processing module and a communication module. The communication module may include an output module (or a sending module) and an input module (or a receiving module), which are respectively configured to implement output (or sending) and input (or receiving) functions in any one of the foregoing aspects and any possible design thereof. The processing module may be configured to implement a processing function in any one of the foregoing aspects and any possible design thereof.

Optionally, the communication apparatus further includes a storage module, configured to store program instructions and data.

According to a twelfth aspect, a communication apparatus is provided, including at least one processor. The processor is configured to run a computer program or instructions, or is configured to cause the communication apparatus to perform the method according to any one of the foregoing aspects through a logic circuit. The communication apparatus may be the first station in the first aspect, the third aspect, the fifth aspect, the seventh aspect, or the ninth aspect, or an apparatus included in the first station, for example, a chip; or the communication apparatus may be the second station in the second aspect, the fourth aspect, the sixth aspect, the eighth aspect, or the tenth aspect, or an apparatus included in the second station, for example, a chip.

In some possible designs, the communication apparatus further includes a memory, configured to store computer instructions and/or a configuration file of the logic circuit. Optionally, the memory and the processor are integrated together, or the memory is independent of the processor.

In a possible design, the communication apparatus further includes a communication interface, configured to input and/or output a signal.

In some possible designs, the communication interface is an interface circuit, configured to read and write computer instructions. For example, the interface circuit is configured to receive computer-executable instructions (the computer-executable instructions are stored in the memory, and may be directly read from the memory, or may be read through another component), and transmit the computer-executable instructions to the processor.

In some possible designs, the communication interface is configured to communicate with a module other than the communication apparatus.

In some possible designs, the communication apparatus may be a chip system. When the communication apparatus is the chip system, the chip system may include a chip, or may include a chip and another discrete component.

According to a thirteenth aspect, a communication apparatus is provided, including a logic circuit and an interface circuit. The interface circuit is configured to input information and/or output information. The logic circuit is configured to perform the method according to any one of the foregoing aspects, to perform processing based on input information and/or generate output information. The communication apparatus may be the first station in the first aspect, the third aspect, the fifth aspect, the seventh aspect, or the ninth aspect, or an apparatus included in the first station, for example, a chip; or the communication apparatus may be the second station in the second aspect, the fourth aspect, the sixth aspect, the eighth aspect, or the tenth aspect, or an apparatus included in the second station, for example, a chip.

It may be understood that, when the communication apparatus provided in any one of the eleventh aspect to the thirteenth aspect is the chip, the foregoing sending action/function may be understood as information output, and the foregoing receiving action/function may be understood as information input.

According to a fourteenth aspect, a computer-readable storage medium is provided. The computer-readable storage medium stores a computer program or instructions, and when the computer program or the instructions are executed by a processor, the method according to any one of the foregoing aspects is performed.

According to a fifteenth aspect, a computer program product is provided. When the computer program product is executed by a processor, the method according to any one of the foregoing aspects is performed.

According to a sixteenth aspect, a communication apparatus is provided. The communication apparatus includes a module/unit configured to perform the method according to any one of the foregoing aspects.

According to a seventeenth aspect, a communication system is provided. The communication system includes the first station according to the first aspect, the third aspect, the fifth aspect, the seventh aspect, or the ninth aspect, and the second station according to the second aspect, the fourth aspect, the sixth aspect, the eighth aspect, or the tenth aspect. The first station and the second station may be implemented as the communication apparatus provided in any one of the eleventh aspect to the fifteenth aspect.

For technical effects brought by any design manner in the eleventh aspect to the seventeenth aspect, refer to the technical effects brought by different design manners in the first aspect to the tenth aspect. Details are not described herein again.

### BRIEF DESCRIPTION OF DRAWINGS

FIG. 1 is a diagram of a communication system according to an embodiment of this application;
FIG. 2 is a diagram of a communication apparatus 200 according to an embodiment of this application;
FIG. 3 is a diagram of an example of a communication method according to an embodiment of this application;
FIG. 4 is a diagram of transmission of an OBSS and a PPDU when a second channel is non-adjacent to a first channel according to an embodiment of this application; and
FIG. 5 is a diagram of a communication apparatus according to an embodiment of this application.

### DESCRIPTION OF EMBODIMENTS

In the description of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. In addition, "at least one of the following items (pieces)" or a similar expression thereof means any combination of these items, including any combination of singular items (pieces) or plural items (pieces). For example, at least one item (piece) of a, b, and (or) c may indicate a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "exemplary" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts in embodiments, refer to each other. In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof. The following implementations of this application are not intended to limit the protection scope of this application.

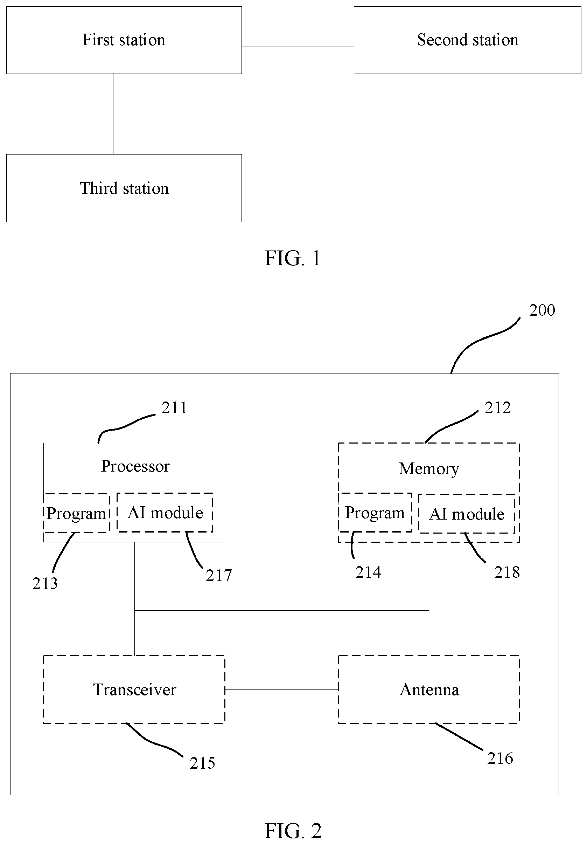

FIG. 1 is a diagram of a communication system according to an embodiment of this application. As shown in FIG. 1, the communication system includes a first station, a second station, and a third station. The first station, the second station, and the third station may be multi-link station (station, STA) devices, or may be multi-link access point (access point, AP) devices. This is not limited in embodiments of this application. In the communication system shown in FIG. 1, the first station is configured to receive an overlapping basic service set (overlapping basic service set, OBSS) data packet from the third station on a first channel of an operating channel bandwidth, and send a physical layer protocol data unit (presentation protocol data unit, PPDU) to the second station on a second channel of the operating channel bandwidth. The second station is configured to receive the PPDU from the first station on the second channel of the operating channel bandwidth. The third station is configured to send the OBSS data packet on the first channel of the operating channel bandwidth.

The AP in embodiments of this application may be an apparatus that is deployed in a wireless communication network to provide a wireless communication function for its associated STA. The AP is mainly deployed at home, inside a building, and inside a campus, with a typical coverage radius of tens of meters to hundreds of meters. Certainly, the AP may alternatively be deployed outdoors. The AP is equivalent to a bridge that connects a wired network and a wireless network. The AP is mainly used to connect wireless network clients together, and then connect the wireless network to the Ethernet. Specifically, the AP may be a communication device with a Wi-Fi chip, such as a base station, a router, a gateway, a repeater, a communication server, a switch, or a bridge. The base station may include various forms of macro base stations, micro base stations, relay stations, and the like.

The STA in embodiments of this application may be a wireless communication chip, a wireless sensor, a wireless communication terminal, or the like, and may also be referred to as a user (or a user station), for example, a user terminal, a user apparatus, an access apparatus, a subscriber station, a subscriber unit, a mobile station, a user agent, or user equipment that supports a Wi-Fi or WLAN communication function. The user terminal may include various handheld devices, vehicle-mounted devices, wearable devices, IoT devices, compute devices, or other processing devices connected to a wireless modem with a wireless communication function, as well as various forms of user equipment (user equipment, UE), mobile stations (mobile station, MS), terminals (terminal), terminal equipment (terminal equipment), portable communication devices, handheld devices, portable compute devices, entertainment devices, gaming devices or systems, global positioning system devices, or any other suitable devices configured to perform network communication via a wireless medium.

For example, the STA and the AP may be devices used in the internet of vehicles, internet of things nodes, sensors, or the like in IoT, smart cameras, smart remote controls, smart water/electricity meters in smart home, sensors or the like in smart city, and communication servers, routers, switches, bridges, computers, or mobile phones.

The AP and the STA in embodiments of this application may also be collectively referred to as a WLAN communication device. The WLAN communication device may include a hardware structure and a software module. The WLAN communication device may implement various communication functions (for example, functions corresponding to the communication method in embodiments of this specification) in a form of the hardware structure, the software module, or a combination of the hardware structure and the software module. A specific function in the various communication functions may be implemented in a manner of the hardware structure, the software module, or the combination of the hardware structure and the software module.

It should be noted that the solutions in embodiments of this application may also be applied to another communication system, and a corresponding name may also be replaced with a name of a corresponding function in the another communication system.

Optionally, related functions of the first station, the second station, and the third station in this application may be implemented by one device, or may be jointly implemented by a plurality of devices, or may be implemented by one or more functional modules in one device, or may be implemented by one or more chips, a system on chip (system on chip, SoC), or a chip system. The chip system may include a chip, or may include a chip and another discrete device. This is not specifically limited in embodiments of this application.

It may be understood that the foregoing function may be a network element in a hardware device, a software function running on dedicated hardware, a combination of hardware and software, or a virtualized function instantiated on a platform (for example, a cloud platform).

For example, the related function of the first station or the second station in this application may be implemented by a communication apparatus 200 in FIG. 2. FIG. 2 is a diagram of a structure of a communication apparatus 200 according to an embodiment of this application. The communication apparatus 200 includes one or more processors 211. The processor 211 may be a general-purpose processor, a dedicated processor, or the like. For example, the processor 211 may be a baseband processor or a central processing unit. The baseband processor may be configured to process a communication protocol and communication data. The central processing unit may be configured to control the communication apparatus (for example, a network device, a terminal device, or a chip) to execute a software program and process data of the software program.

Optionally, in a design, the processor 211 may include a program 213 (which may also be referred to as code or instructions sometimes). The program 213 may be run on the processor 211, to cause the communication apparatus 200 to perform the method described in the following embodiments.

Optionally, the communication apparatus 200 may include one or more memories 212. The memory 212 stores a program 214 (which may also be referred to as code or instructions sometimes), and the program 214 may be run on the processor 211, to cause the communication apparatus 200 to perform the method described in the following method embodiments.

Optionally, the processor 211 and/or the memory 212 may include artificial intelligence (artificial intelligence, AI) modules 217 and 218, and the AI module is configured to implement an AI-related function. The AI module may be implemented by software, hardware, or a combination of software and hardware. For example, the AI module may include a RAN intelligent controller (RAN intelligent controller, RIC) module. For example, the AI module may be a near-real-time RIC or a non-real-time RIC.

Optionally, the processor 211 and/or the memory 212 may further store data. The processor and the memory may be separately disposed, or may be integrated together.

Optionally, the communication apparatus 200 may further include a transceiver 215 and/or an antenna 216. The processor 211 may also be referred to as a processing unit sometimes, and controls the communication apparatus (for example, the network device or the terminal device). The transceiver 215 may also be referred to as a transceiver unit, a transceiver device, a transceiver circuit, a transceiver, or the like sometimes, and is configured to implement receiving and sending functions of the communication apparatus through the antenna 216.

Optionally, in embodiments of this application, the processor 211 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 211 may be another apparatus with a processing function, for example, a circuit, a component, or a software module. This is not limited.

Optionally, in embodiments of this application, the memory 212 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or the like. This is not limited.

Although not shown, in an optional implementation, the communication apparatus 200 further includes an output device and an input device. For example, the input device is a device such as a keyboard, a mouse, a microphone, or a joystick, and the output device is a device such as a display or a speaker (speaker).

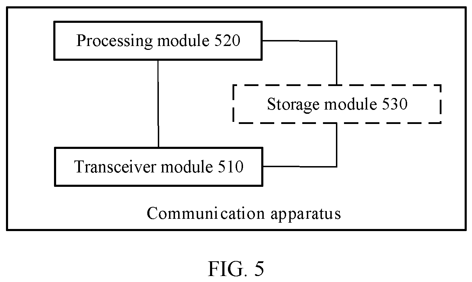

It should be noted that the communication apparatus 200 may be a desktop computer, a portable computer, a network server, a mobile phone, a tablet computer, a wireless terminal, an embedded device, a chip system, or a device with a structure similar to that in FIG. 5. In addition, the composition structure shown in FIG. 2 does not constitute a limitation on the communication apparatus. In addition to the components shown in FIG. 2, the communication apparatus may include more or fewer components than those shown in the figure, or some components may be combined, or there may be a different component layout.

In embodiments of this application, the chip system may include a chip, or may include a chip and another discrete component.

The following describes the communication method provided in embodiments of this application with reference to the communication system shown in FIG. 1.

It should be noted that, in the following embodiments of this application, a name of a message between network elements, a name of each parameter, a name of each piece of information, or the like is merely an example, and may be another name in other embodiments. This is not specifically limited in the method provided in this application.

It may be understood that, in embodiments of this application, each network element may perform some or all of the steps in embodiments of this application. These steps or operations are merely examples. In embodiments of this application, other operations or variations of various operations may be further performed. In addition, the steps may be performed in a sequence different from that presented in embodiments of this application, and not all the operations in embodiments of this application may be necessarily performed.

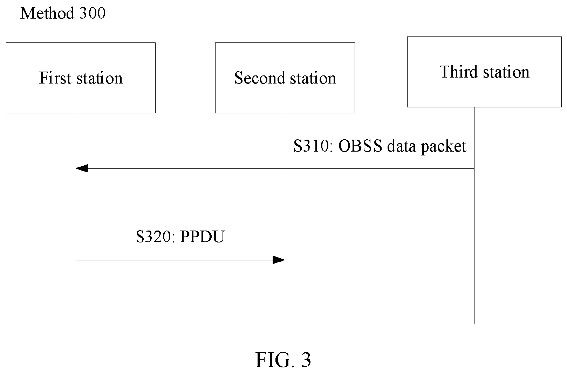

FIG. 3 is a diagram of an example of a communication method according to an embodiment of this application. The method is described by using interaction between a first station, a second station, and a third station as an example. Certainly, a body that performs an action of the first station in the method may alternatively be an apparatus/module in the first station, for example, a chip, a processor, or a processing unit in the first station; a body that performs an action of the second station in the method may alternatively be an apparatus/module in the second station, for example, a chip, a processor, or a processing unit in the second station; and a body that performs an action of the third station in the method may alternatively be an apparatus/module in the third station, for example, a chip, a processor, or a processing unit in the third station. This is not specifically limited in embodiments of this application. For example, as shown in FIG. 3, the method 300 includes the following steps.

S310: The third station sends an OBSS data packet to the first station on a first channel of an operating channel bandwidth. Correspondingly, the first station receives the OBSS data packet from the third station on the first channel of the operating channel bandwidth.

In a possible implementation, the first channel includes a first primary channel, and the OBSS data packet is transmitted on the first primary channel. In other words, the OBSS data packet occupies only the first primary channel. In another possible implementation, the first channel includes a first primary channel and a secondary channel, and the OBSS data packet of the first station is transmitted on the first primary channel and the secondary channel. In other words, the OBSS data packet of the first station further occupies the another secondary channel in addition to the first primary channel. The first station and the third station are from different basic service sets (basic service set, BSS). When receiving a data packet on the first channel, the first station may determine, by using a BSS color field in a preamble of the data packet, whether the data packet is from its own BSS or from another BSS.

S320: The first station sends a PPDU to the second station on a second channel of the operating channel bandwidth. Correspondingly, the second station receives the PPDU from the first station on the second channel of the operating channel bandwidth.

In a possible implementation, the second channel includes a second primary channel, and the PPDU is transmitted on the second primary channel. In other words, the PPDU occupies only the second primary channel. In another possible implementation, the second channel includes a second primary channel and another secondary channel, and the PPDU is transmitted on the second primary channel and the another secondary channel. In other words, the PPDU further occupies the another secondary channel in addition to the second primary channel. It should be noted that the another secondary channel is a secondary channel other than the secondary channel included in the first channel. Optionally, the second channel or the second primary channel may be located outside the operating channel bandwidth of the first station.

In a scenario, when the first station receives the OBSS data packet on the first channel of the operating channel bandwidth (that is, the first channel is occupied), and the first station has a PPDU to be sent, the first station performs channel contention on the second primary channel, and after the contention succeeds, the first station sends the PPDU on the second channel of the operating channel bandwidth. It should be noted that, if it is detected that the first channel is occupied by the OBSS data packet, another station and an AP that are located in a same BSS as the first station also switch to the second primary channel for sending or receiving.

The second primary channel in embodiments of this application may also be referred to as a temporary primary channel, a non-primary channel, or another name. This is not limited in embodiments of this application. When the first primary channel is occupied, the second primary channel is used to perform channel contention to send data, or the second primary channel is used to perform packet detection to receive data.

In a possible implementation, the method provided in embodiments of this application further includes: An AP sends second indication information to the first station, where the second indication information indicates the second primary channel. It should be understood that, when the second indication information is sent, the first station is only a non-AP STA. For example, the second indication information may include a frequency location of the second primary channel. Specifically, the second indication information indicates a sequence number of a 20 MHz channel within the BSS operating channel bandwidth from low frequency to high frequency or from high frequency to low frequency, that is, indicates which 20 MHz channel the second primary channel is. In another possible implementation, the second primary channel is at a predefined frequency location.

It should be noted that, before sending the PPDU to the second station on the second channel of the operating channel bandwidth, the first station needs to first determine that the second channel is idle. For example, the first station performs channel contention on the second primary channel, and if another secondary channel adjacent to the first primary channel is idle during point coordination function ((point coordination function, PCF) interframe space (PCF interframe space, PIFS)) duration before a backoff counter is 0, the first station may send the PPDU to the second station on the second channel, where the second channel includes the second primary channel, or the second channel includes the second primary channel and the another secondary channel. A composition rule for the second primary channel and the another secondary channel is the same as a rule that a 40 MHz, 80 MHz, 160 MHz, or 320 MHz bandwidth supported by the draft standard 802.11-2020 and the draft standard 802.11be draft 5.0 is composed of a primary channel and one or more secondary channels. Details are not described in embodiments of this application. For another example, if the first station determines, by performing energy detection, that energy is less than a fourth threshold (for example, -62 dBm), that the second channel is idle, the first station may send the PPDU on the second channel.

In embodiments of this application, transmission of the PPDU sent by the first station to the second station on the operating channel bandwidth meets a preset condition, and the preset condition is used to reduce interference caused by transmission of the PPDU sent by the first station on the operating channel bandwidth to transmission of the OBSS data packet on the first channel.

Optionally, in embodiments of this application, before the first station sends the PPDU to the second station on the second channel of the operating channel bandwidth, the communication method provided in embodiments of this application further includes: The first station determines the second channel. That transmission of the PPDU sent by the first station to the second station on the operating channel bandwidth meets the preset condition may also be understood as that the second channel meets the preset condition. In embodiments of this application, the two descriptions may be considered equivalent. This is not limited in embodiments of this application.

Optionally, in a possible implementation, the preset condition includes that the second channel is non-adjacent to the first channel. In embodiments of this application, a distance between a center frequency of adjacent to the first channel and a center frequency of the first channel is W MHz, and a distance between a center frequency of non-adjacent to the first channel and the center frequency of the first channel is at least 2W MHz. W is a bandwidth of the PPDU sent by the first station on the second channel. In this solution, any 20 MHz channel included in the second channel needs to be non-adjacent to the first channel. Because any 20 MHz channel included in the second channel is non-adjacent to the first channel, greater interference rejection can be achieved, thereby reducing interference caused by the PPDU transmitted on the second channel to the OBSS PPDU transmitted on the first channel.

Optionally, in a possible implementation, the preset condition includes that a bandwidth of the second channel needs to ensure that any 20 MHz of the second channel is non-adjacent to the first channel. It should be noted that the primary channel mentioned herein generally refers to 20 MHz.

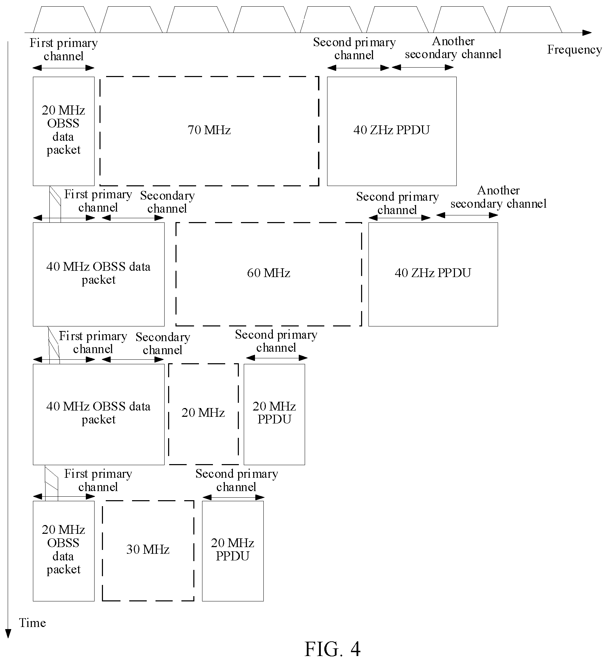

FIG. 4 is a diagram of transmission of an OBSS PPDU transmitted on a first channel and a PPDU transmitted on a second channel when the second channel is non-adjacent to the first channel according to an embodiment of this application. As shown in FIG. 4, the operating channel bandwidth is 160 MHz. In a possible manner, the first channel includes a first primary channel, and a bandwidth of the first primary channel is 20 MHz, that is, a bandwidth of the first channel is 20 MHz; and the second channel includes a second primary channel and another secondary channel, a bandwidth of the second primary channel is 20 MHz, and a bandwidth of the second channel is 40 MHz. In this case, a distance between a starting location of the bandwidth of the second channel and the center frequency of the first channel is at least 80 MHz. In a possible manner, the first channel includes a first primary channel and a secondary channel, a bandwidth of the first primary channel is 20 MHz, and a bandwidth of the first channel is 40 MHz; and the second channel includes a second primary channel and another secondary channel, a bandwidth of the second primary channel is 20 MHz, and a bandwidth of the second channel is 40 MHz. In this case, a distance between a starting location of the bandwidth of the second channel and the center frequency of the first channel is at least 80 MHz. In a possible manner, the first channel includes a first primary channel and a secondary channel, a bandwidth of the first primary channel is 20 MHz, and a bandwidth of the first channel is 40 MHz; and the second channel includes a second primary channel, a bandwidth of the second primary channel is 20 MHz, and a bandwidth of the second channel is 20 MHz. In this case, a distance between a starting location of the bandwidth of the second channel and the center frequency of the first channel is at least 40 MHz. In a possible manner, the first channel includes a first primary channel, a bandwidth of the first primary channel is 20 MHz, and a bandwidth of the first channel is 20 MHz; and the second channel includes a second primary channel, a bandwidth of the second primary channel is 20 MHz, and a bandwidth of the second channel is 20 MHz. In this case, a distance between a starting location of the bandwidth of the second channel and the center frequency of the first channel is at least 40 MHz. It should be noted that, in FIG. 4, an example in which the second channel is a non-adjacent channel nearest to the first channel in frequency is used for description. The second channel may alternatively not be a non-adjacent channel nearest to the first channel in frequency. This is used as an example in FIG. 4, but is not limited herein.

Optionally, in a possible implementation, the preset condition includes that a difference between a center frequency of the second channel and a center frequency of the first channel is greater than or equal to a first threshold. In this solution, the difference between the center frequency of the second channel and the center frequency of the first channel is greater than or equal to the first threshold, which can reduce interference caused by the PPDU sent on the second channel to the OBSS received on the first channel.

The second channel includes a second primary channel, that is, a difference between a center frequency of the second primary channel and the center frequency of the first channel is greater than or equal to the first threshold. Alternatively, if the second channel includes a second primary channel and another secondary channel, the difference between the center frequency of the second channel and the center frequency of the first channel is greater than or equal to the first threshold. For example, if a bandwidth of the second channel is a frequency from 0 MHz to 60 MHz, the center frequency of the second channel is 30 MHz, and a difference between a frequency of 30 MHz and the center frequency of the first channel is greater than or equal to the first threshold.

Optionally, in a possible implementation, the preset condition includes that a center frequency of any channel included in the second channel and a center frequency of the first channel is greater than or equal to a first threshold. For example, a difference between a center frequency of a channel with a lowest frequency in the second channel and the center frequency of the first channel is greater than or equal to the first threshold (where a frequency of the second channel is greater than a frequency of the first channel). For another example, a difference between a center frequency of a channel with a highest frequency in the second channel and the center frequency of the first channel is greater than or equal to the first threshold (where a frequency of the second channel is less than a frequency of the first channel).

In a possible implementation, the first threshold is predefined. For example, the first threshold may be a bandwidth of the PPDU sent by the first station to the second station. For another example, the first threshold may be a fixed value, for example, 20 MHz, 40 MHz, or 80 MHz. This is not limited in embodiments of this application. In this solution, the first threshold is predefined, which can reduce overheads for indicating the first threshold.

In another possible implementation, the communication method provided in embodiments of this application further includes: An AP sends first indication information to the first station. Correspondingly, the first station receives the first indication information from the AP. Optionally, the AP sends the first indication information to the first station via a beacon frame. The first indication information indicates the first threshold. For example, the first indication information may include the first threshold, or the first indication information may include a bit value "0" or a bit value "1", which indicates that the first threshold is a bandwidth of the PPDU sent by the first station to the second station. This is not limited in embodiments of this application. In this solution, the AP indicates the first threshold to the first station by using the first indication information, which is flexible.

Optionally, in a possible implementation, the preset condition includes that a power difference between the PPDU transmitted on the second primary channel and the OBSS PPDU transmitted on the first channel is less than or equal to a second threshold. In this solution, the transmit power of the PPDU is limited, to reduce interference caused by the PPDU sent on the second channel to the OBSS PPDU transmitted on the first channel.

In embodiments of this application, the second channel may be adjacent to the first channel, or the second channel may be non-adjacent to the first channel. This is not limited in embodiments of this application.

In a possible implementation, the second threshold is predefined. For example, Table 1 is a table of minimum adjacent channel and non-adjacent channel interference rejection requirements. As shown in Table 1, for example, if the OBSS data packet uses a BPSK modulation scheme, and the second channel is adjacent to the first channel, the second threshold is 16 dB. In other words, the difference between the power of the PPDU transmitted on the second channel and the power of the OBSS PPDU transmitted on the first channel cannot exceed 16 dB. If the second channel is non-adjacent to the first channel, the second threshold is 32 dB. In other words, the difference between the power of the PPDU transmitted on the second channel and the power of the OBSS PPDU transmitted on the first channel cannot exceed 32 dB. For another example, if the OBSS data packet uses QPSK, R is a 3/4 modulation scheme, the second channel is adjacent to the first channel, the second threshold is 11 dB, and the second channel is non-adjacent to the first channel, the second threshold is 27 dB. By analogy, details are not described in embodiments of this application.

**Table 1**

| Modulation and coding scheme (Modulation and coding scheme) | Modulation (Modulation) scheme | Rate Rate (R) | Adjacent channel rejection (Adjacent channel rejection) (dB) 20/40/80/1660/320 MHz channel | Non-adjacent channel rejection (Non-adjacent channel rejection) (dB) 20/40/80/1660/320 MHz channel |
|---|---|---|---|---|
| MCS 0 | Binary phase shift keying (binary phase shift keying, BPSK) | 1/2 | 16 | 32 |
| MCS 1 | Quadrature phase shift keying (quadrature phase shift keying, QPSK) | 1/2 | 13 | 29 |
| MCS 2 | QPSK | 3/4 | 11 | 27 |
| MCS 3 | 16-quadrature amplitude modulation (quadrature amplitude modulation, QAM) | 1/2 | 8 | 24 |
| MCS 4 | 16-QAM | 3/4 | 4 | 20 |
| MCS 5 | 64-QAM | 2/3 | 0 | 16 |
| MCS 6 | 64-QAM | 3/4 | -1 | 15 |
| MCS 7 | 64-QAM | 5/6 | -2 | 14 |
| MCS 8 | 256-QAM | 3/4 | -7 | 9 |
| MCS 9 | 256-QAM | 5/6 | -9 | 7 |
| MCS 10 | 1024-QAM | 3/4 | -12 | 4 |
| MCS 11 | 1024-QAM | 5/6 | -14 | 2 |
| MCS 12 | 4096-QAM | 3/4 | -17 | -1 |
| MCS 13 | 4096-QAM | 5/6 | -20 | -4 |
| MCS15 | BPSK-DCM | 1/2 | 16 | 32 |

Optionally, in a possible implementation, the preset condition includes that a transmission parameter of the PPDU is the same as a transmission parameter of the OBSS data packet, so that the PPDU transmitted on the second channel is aligned with the OBSS PPDU transmitted on the first channel on each OFDM symbol. In this solution, the transmission parameter of the PPDU is limited to be the same as the transmission parameter of the OBSS data packet, so that there is no interference or little interference between subcarriers of the PPDU and the OBSS data packet, thereby reducing interference caused by the PPDU sent on the second channel to the OBSS received on the first channel.

The transmission parameter in embodiments of this application includes at least one of a cyclic prefix (cyclic prefix, CP) length of an orthogonal frequency division multiplexing (orthogonal frequency division multiplexing, OFDM) symbol or a quantity of fast Fourier transform (fast Fourier transform, FFT) points. Alternatively, the transmission parameter includes another parameter. This is not limited in embodiments of this application.

In embodiments of this application, when there is another OBSS data packet to be transmitted on the first channel after the OBSS data packet, the OBSS data packet needs to carry indication information, to indicate a transmission parameter of the data packet after the OBSS data packet. The transmission parameter of the data packet after the OBSS data packet includes at least one of a long training field (long training field, LTF) type, a quantity of LTFs, or the like.

Optionally, in embodiments of this application, there may be no concept of a preset condition. To be specific, the second channel is non-adjacent to a channel occupied by the first channel; or a difference between a center frequency of the second channel and a center frequency of the first channel is greater than or equal to a first threshold; or a difference between a center frequency of any channel in the second channel and a center frequency of the first channel is greater than or equal to a first threshold; or transmit power of the PPDU is less than or equal to a second threshold; or a transmission parameter of the PPDU is partially or completely the same as a transmission parameter of the OBSS data packet.

Optionally, in embodiments of this application, the first station receives the OBSS data packet (or referred to as an OBSS PPDU) on the first channel, where a preamble of the OBSS PPDU includes an indication of a modulation and coding scheme (modulation and coding scheme, MCS). If the modulation and coding scheme of the OBSS data packet received by the first station is a predefined MCS set, for example, any MCS set in an MCS 5 to an MCS 13, transmission of the PPDU sent by the first station on the second channel needs to meet the foregoing preset condition, or the first station does not switch to the second primary channel to send the PPDU but remains on the first primary channel to perform listening. If the modulation and coding scheme of the OBSS data packet received by the first station on the first channel is a non-predefined MCS set, for example, any MCS set in an MCS 0 to an MCS 4 and an MCS 15, the first station switches to the second channel to send the PPDU without needing to meet the foregoing preset condition. For example, if the modulation and coding scheme of the OBSS data packet received by the first station on the first channel is the MCS 0, the first station switches to the second channel to send the PPDU without needing to meet the foregoing preset condition. For another example, if the modulation and coding scheme of the OBSS data packet received by the first station on the operating channel is the MCS 5, transmission of the PPDU sent by the first station on the second channel needs to meet the foregoing preset condition, or the first station does not switch to the second channel for transmission but remains on the first primary channel to perform listening.

According to the communication method provided in embodiments of this application, the first station can receive the OBSS data packet on the first channel of the operating channel bandwidth, and send the PPDU on the second channel. Transmission of the PPDU meets the preset condition, which can reduce interference caused by transmission of the PPDU to transmission of the OBSS data packet.

In embodiments of this application, when obtaining an OBSS PPDU on the first channel through listening, the first station may learn of a bandwidth, a BSS color, and an MCS of the OBSS PPDU via a preamble of the OBSS PPDU.

In embodiments of this application, when obtaining an OBSS PPDU on the first channel through listening, the first station obtains a TXOP length based on a duration field in a MAC header of the OBSS PPDU, and the first station switches to the second channel for sending or receiving. For sending, the first station contends for a channel on the second primary channel, and sends the PPDU on the second channel based on a channel idle status. For receiving, the first station performs listening on the second primary channel, and then receives the PPDU on the second channel. Embodiments mentioned in the present invention are applicable to a scenario in which the first station learns, through information broadcast by the AP, of a periodic transmission (service) window of a station of another BSS on the first channel, for example, a target wake time (target wake time, TWT) service window or a restricted target wake time (restricted target wake time, r-TWT) service window. In this case, the first station may switch to the second channel to transmit the PPDU according to embodiments. Embodiments mentioned in the present invention are further applicable to a scenario in which the first station learns, through information broadcast by the AP, of a transmission (service) window of non-Wi-Fi radio in the AP device on the first channel. In this case, the first station may switch to the second channel to transmit the PPDU according to embodiments.

In embodiments of this application, unless otherwise specified, the first station and the second station include an AP station and a non-AP station.

The foregoing mainly describes the solutions provided in embodiments of this application from a perspective of interaction between the first station, the second station, and the third station. Correspondingly, an embodiment of this application further provides a communication apparatus, and the communication apparatus is configured to implement the foregoing method. The communication apparatus may be the first station in the foregoing method embodiment, or an apparatus including the foregoing first station, or a component that can be used in the first station; or the communication apparatus may be the second station in the foregoing method embodiment, or an apparatus including the foregoing second station, or a component that can be used in the second station; or the communication apparatus may be the third station in the foregoing method embodiment, or an apparatus including the foregoing third station, or a component that can be used in the third station. It may be understood that, to implement the foregoing functions, the communication apparatus includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be understood that division into the modules in embodiments of this application is an example, and is merely logical function division. In actual implementation, there may be another division manner.

For example, FIG. 5 is a diagram of a communication apparatus according to an embodiment of this application. For example, the communication apparatus is the first station in the foregoing method embodiment (which may be a chip of the first station, a module of the first station, or an apparatus inside the first station), and the first station includes a transceiver module 510 and a processing module 520. The transceiver module 510 may also be referred to as a transceiver unit, and is configured to implement a transceiver function. For example, transceiver module 510 may be a transceiver circuit, a transceiver device, a transceiver, or a communication interface.

In embodiments of this application, the transceiver module 510 is configured to receive an overlapping basic service set OBSS data packet on a first channel of an operating channel bandwidth. The first channel includes a first primary channel.

In embodiments of this application, the processing module 520 is configured to: determine a second channel, and send a physical layer protocol data unit PPDU on the second channel of the operating channel bandwidth through the transceiver module 510. Transmission of the PPDU meets a preset condition, and the preset condition is used to reduce interference caused by transmission of the PPDU to transmission of the OBSS data packet.

In embodiments of this application, the first channel includes a first primary channel, or the first channel includes the first primary channel and a secondary channel.

In embodiments of this application, the second channel includes a second primary channel, or the second channel includes the second primary channel and another secondary channel.

In embodiments of this application, the preset condition includes that the second channel is non-adjacent to the first channel.

In embodiments of this application, the preset condition includes that a difference between a center frequency of the second channel and a center frequency of the first channel is greater than or equal to a first threshold.

In embodiments of this application, the preset condition includes that a difference between a center frequency of any channel included in the second channel and a center frequency of the first channel is greater than or equal to a first threshold.

In a possible implementation, the first threshold is predefined.

In another possible implementation, the transceiver module 510 is further configured to receive first indication information from an access point AP, where the first indication information indicates the first threshold.

For example, the first threshold is a transmission bandwidth of the PPDU.

In embodiments of this application, the preset condition includes that transmit power of the PPDU is less than or equal to a second threshold.

In embodiments of this application, the preset condition includes that a transmission parameter of the PPDU is partially or completely the same as a transmission parameter of the OBSS data packet.

The transmission parameter may include at least one of a cyclic prefix CP length of an orthogonal frequency division multiplexing OFDM symbol or a quantity of fast Fourier transform FFT points.

Alternatively, for example, FIG. 5 is a diagram of a communication apparatus according to an embodiment of this application. For example, the communication apparatus is the second station in the foregoing method embodiment (which may be a chip of the second station, a module of the second station, or an apparatus inside the second station), and the second station includes a transceiver module 510 and a processing module 520. The transceiver module 510 may also be referred to as a transceiver unit, and is configured to implement a transceiver function. For example, transceiver module 510 may be a transceiver circuit, a transceiver device, a transceiver, or a communication interface.

In embodiments of this application, the transceiver module 510 is configured to receive a physical layer protocol data unit PPDU on a second channel of an operating channel bandwidth. Transmission of the PPDU meets a preset condition, and the preset condition is used to reduce interference caused by transmission of the PPDU to transmission of an OBSS data packet.

In embodiments of this application, the first channel includes a first primary channel, or the first channel includes the first primary channel and a secondary channel.

In embodiments of this application, the second channel includes a second primary channel, or the second channel includes the second primary channel and another secondary channel.

In embodiments of this application, the preset condition includes that the second channel is non-adjacent to the first channel.

In embodiments of this application, the preset condition includes that a difference between a center frequency of the second channel and a center frequency of the first channel is greater than or equal to a first threshold.

In embodiments of this application, the preset condition includes that a difference between a center frequency of any channel included in the second channel and a center frequency of the first channel is greater than or equal to a first threshold.

In a possible implementation, the first threshold is predefined.

For example, the first threshold is a transmission bandwidth of the PPDU.

In embodiments of this application, the preset condition includes that transmit power of the PPDU is less than or equal to a third threshold.

In embodiments of this application, the preset condition includes that a transmission parameter of the PPDU is partially or completely the same as a transmission parameter of the OBSS data packet.

The transmission parameter may include at least one of a cyclic prefix CP length of an orthogonal frequency division multiplexing OFDM symbol or a quantity of fast Fourier transform FFT points.

All related content of the steps in the foregoing method embodiment may be cited in function descriptions of the corresponding functional modules. Details are not described herein again. Optionally, the communication apparatus may further include a storage module 530. The storage module 530 may be configured to store instructions and/or data. The processing module 520 may read the instructions and/or the data in the storage module 530.

In embodiments of this application, the communication apparatus may be presented in a form of each functional module obtained through division in an integrated manner. The "module" herein may be a specific ASIC, a circuit, a processor that executes one or more software or firmware programs, a memory, an integrated logic circuit, and/or another component that can provide the foregoing functions. In a simple embodiment, a person skilled in the art may figure out that the communication apparatus may be in a form of the communication apparatus 200 shown in FIG. 2.

For example, the processor 211 in the communication apparatus 200 shown in FIG. 2 may invoke computer-executable instructions stored in the memory 212, to cause the communication apparatus to perform the communication method in the foregoing method embodiment.

Specifically, functions/implementation processes of the transceiver module 510 and the processing module 520 in FIG. 5 may be implemented by the processor 211 in the communication apparatus 200 shown in FIG. 2 by invoking the computer-executable instructions stored in the memory 212. Alternatively, functions/implementation processes of the processing module 520 in FIG. 5 may be implemented by the processor 211 in the communication apparatus 200 shown in FIG. 2 by invoking the computer-executable instructions stored in the memory 212.

The communication apparatus provided in embodiments of this application (which may be a chip of the communication apparatus, a module of the communication apparatus, or an apparatus inside the communication apparatus) may perform the foregoing communication method. Therefore, for technical effects that can be achieved by the communication apparatus, refer to the foregoing method embodiment. Details are not described herein again.

It should be understood that one or more of the foregoing modules or units may be implemented by using software, hardware, or a combination thereof. When any one of the foregoing modules or units is implemented by using software, the software exists in a form of computer program instructions, and is stored in the memory. The processor may be configured to execute the program instructions and implement the foregoing method procedure. The processor may be built into an SoC (system on chip) or an ASIC, or may be an independent semiconductor chip. In addition to a core for executing software instructions to perform operations or processing, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processor (digital signal processor, DSP) chip, a microcontroller unit (microcontroller unit, MCU), an artificial intelligence processor, an ASIC, an SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include a memory. When the communication apparatus is a chip system, the communication device may include a chip, or may include a chip and another discrete component. This is not specifically limited in embodiments of this application.

Optionally, an embodiment of this application further provides a computer-readable storage medium. The computer-readable storage medium stores a computer program or instructions. When the computer program or instructions are run on a communication apparatus, the communication apparatus is caused to perform the method in any one of the foregoing method embodiments or any one of the implementations of the foregoing method embodiments.

Optionally, an embodiment of this application further provides a communication system. The communication system includes the first station, the second station, and the third station in the foregoing method embodiment.

All or some of the foregoing embodiments may be implemented by using software, hardware, firmware, or any combination thereof. When a software program is used to implement the foregoing embodiments, the foregoing embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, persons skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
detecting, by a first station, an overlapping basic service set OBSS data packet on a first channel, wherein the first channel comprises a first primary channel; and
sending, by the first station, a physical layer protocol data unit PPDU on a second channel, wherein transmission of the PPDU meets a preset condition.

2. The method according to claim 1, wherein
the second channel comprises a second primary channel; or
the second channel comprises the second primary channel and another secondary channel.

3. The method according to claim 1 or 2, wherein the preset condition comprises that the second channel is non-adjacent to the first channel.

4. The method according to claim 2, wherein the preset condition comprises that a difference between a center frequency of the second channel or a center frequency of the second primary channel and a center frequency of the first channel is greater than or equal to a first threshold.

5. The method according to claim 2, wherein a difference between a center frequency of any channel comprised in the second channel and a center frequency of the first channel is greater than or equal to a first threshold.

6. The method according to claim 4 or 5, wherein the method further comprises:
receiving, by the first station, first indication information from an access point AP, wherein the first indication information indicates the first threshold.

7. The method according to claim 4 or 5, wherein the first threshold is a transmission bandwidth of the PPDU.

8. The method according to claim 1 or 2, wherein the preset condition comprises that transmit power of the PPDU is less than or equal to a second threshold.

9. The method according to claim 1 or 2, wherein the preset condition comprises that a transmission parameter of the PPDU is the same as a transmission parameter of the OBSS data packet.

10. The method according to claim 9, wherein the transmission parameter comprises at least one of a cyclic prefix CP length of an orthogonal frequency division multiplexing OFDM symbol or a quantity of fast Fourier transform FFT points.

11. The method according to any one of claims 1 to 10, wherein a modulation and coding scheme MCS of the OBSS data packet is a non-predefined MCS set.

12. The method according to any one of claims 1 to 11, wherein the second channel is located within an operating channel bandwidth of the first station.

13. A communication method, comprising:
receiving, by a second station, a physical layer protocol data unit PPDU on a second channel, wherein transmission of the PPDU meets a preset condition, and the first channel comprises a first primary channel.

14. The method according to claim 13, wherein
the second channel comprises a second primary channel; or
the second channel comprises the second primary channel and another secondary channel.

15. The method according to claim 13 or 14, wherein the preset condition comprises that the second channel is non-adjacent to the first channel.

16. The method according to claim 15, wherein the preset condition comprises that a difference between a center frequency of the second channel and a center frequency of the first channel is greater than or equal to a first threshold.

17. The method according to claim 16, wherein a difference between a center frequency of any channel comprised in the second channel and the center frequency of the first channel is greater than or equal to the first threshold.

18. The method according to claim 16 or 17, wherein the first threshold is a transmission bandwidth of the PPDU.

19. The method according to claim 13 or 14, wherein the preset condition comprises that transmit power of the PPDU is less than or equal to a second threshold.

20. The method according to claim 13 or 14, wherein the preset condition comprises that a transmission parameter of the PPDU is partially or completely the same as a transmission parameter of the OBSS data packet.

21. The method according to claim 20, wherein the transmission parameter comprises at least one of a cyclic prefix CP length of an orthogonal frequency division multiplexing OFDM symbol or a quantity of fast Fourier transform FFT points.

22. The method according to any one of claims 13 to 21, wherein a modulation and coding scheme MCS of the OBSS data packet is a non-predefined MCS set.

23. A communication apparatus, wherein the communication apparatus comprises a module configured to perform the method according to any one of claims 1 to 12, or comprises a module configured to perform the method according to any one of claims 13 to 22.

24. A communication apparatus, wherein the communication apparatus comprises a processor, and the processor is configured to perform the method according to any one of claims 1 to 12, or cause the communication apparatus to perform the method according to any one of claims 13 to 22.

25. A computer-readable storage medium, wherein the computer-readable storage medium comprises instructions, and when the instructions are run, the method according to any one of claims 1 to 12 or the method according to any one of claims 13 to 22 is implemented.

26. A computer program product, wherein the computer program product comprises instructions, and when the instructions are run, the method according to any one of claims 1 to 12 or the method according to any one of claims 13 to 22 is implemented.

27. A communication system, wherein the communication system comprises the communication apparatus according to claim 23 and the communication apparatus according to claim 24.
